# EUROPÄISCHE PATENTANMELDUNG

(11) **EP 4 548 994 A1**
(43) Veröffentlichungstag der Anmeldung: **07.05.2025**
(21) Anmeldenummer: 24209126.2
(22) Anmeldetag: 28.10.2024
(51) Int. Cl.: B01D 29/35, B01D 29/64

(54) **FILTER FÜR EINE DÜSENROLLENWÄSCHE**

(30) Priorität: 03.11.2023 DE 102023130427
(71) Anmelder: Putsch GmbH & Co. KG, 58095 Hagen (DE)
(72) Erfinder: Söder, Benedikt, 58313 Herdecke (DE); Krüger, Erik, 44787 Bochum (DE)
(74) Vertreter: Köchling, Marietta

(57) **Zusammenfassung**

Die Erfindung zeigt einen Filter für eine Düsenrollenwäsche zum Entfernen von Verunreinigungen von Feldfrüchten, mit einer Partikelgröße von mindestens 1,5mm Durchmesser, wobei der Filter (1) ein Filtergehäuse (4) mit einem an oder nahe am ersten Endbereich angeordnetem Einlauf (2) und einen am oder nahe am entgegensetzten zweiten Ende angeordnetem Auslauf (3) für ungefiltertes Schwemmwasser aufweist, wobei im Filtergehäuse (4) zwischen einem Einlauf und einem Auslauf ein Siebkorb (6) angeordnet ist, der von Teilen des Schwemmwassers durchströmt ist, dieses beim Durchströmen filtert, und durch einen Filtratauslauf (7), durch den ausschließlich durch den Siebkorb (6) gefiltertes Schwemmwasser durchfließt, an das Leitungssystem zur Zuführung zur Düsenrollenwäsche abgibt, wobei innerhalb des Filtergehäuses (4) Mittel zur Reinigung des Siebkorbes (6) angeordnet sind.

## Beschreibung

Die Erfindung betrifft einen Filter für eine Düsenrollenwäsche zum Entfernen von Verunreinigungen von Feldfrüchten, insbesondere von Zuckerrüben, wobei die Düsenrollenwäsche zumindest ein mit Waschwasser befülltes Becken, insbesondere Klärbecken, aufweist, welches mittels eines Leitungssystems und mindestens einer Hochdruckpumpe mit der Düsenrollenwäsche zur Versorgung derselben mit Schwemmwasser verbunden ist, wobei zwischen Becken oder Klärbecken und Leitungssystem ein Filter zur Filtration des Schwemmwassers und Entfernung von Partikeln mit einer Partikelgröße von mindestens 1,5mm Durchmesser angeordnet ist.

Derartige Düsenrollenwäschen werden in der Praxis zur Reinigung von Feldfrüchten, wie insbesondere von Zuckerrüben, häufig verwendet. Die vom Feld angelieferten Zuckerrüben weisen häufig eine beträchtliche Menge an Verunreinigungen, wie insbesondere anhaftenden Steinen und Erdreich, auf. Vor der Verarbeitung müssen die Feldfrüchte oder Zuckerrüben zunächst von diesen Verunreinigungen befreit werden. Hierzu werden häufig die eingangs erwähnten Düsenrollenwäschen eingesetzt. In der Düsenrollenwäsche werden die Zuckerrüben mit Hilfe von mehreren Reihen von Wasserdüsen mit hohem Druck von ca. 10 bis 11 bar beaufschlagt und somit von Schmutz befreit. Hierzu muss der Düsenrollenwäsche ein hoher Volumenstrom an gereinigtem Schwemmwasser zur Verfügung gestellt werden. In der Praxis wird dieses Schwemmwasser häufig aus einem Rundklärbecken, welches auch als Bruckner bezeichnet wird, bezogen. Oftmals sind jedoch in diesen Klärbecken im Schwemmwasser noch organische Schwebstoffe enthalten. Diese Schwebstoffe können ab einer Partikelgröße von 1,5mm die Düsen der Düsenrollenwäsche verstopfen. In der Praxis werden zur Verhinderung einer derartigen Verstopfung kurz vor der Düsenrollenwäsche so genannte Sicherheitsfilter eingesetzt. Hierbei ist es problematisch, dass ab einer gewissen Menge an Feststoffen im Schwemmwasser eine vorgesehene intervallartige Selbstreinigung der Filter unzureichend ist. Zudem sind diese Filter aufgrund der Anordnung kurz vor der Düsenrollenwäsche bauartbedingt sehr kostenintensiv, da diese Filter einem hohen Druck von ca. 10 bis 11 bar standhalten müssen. Die Feststoffe im Schwemmwasser sind dabei in der Regel durch sich sammelnde Krautpartikel gebildet. Aufgrund der genannten Nachteile kommt es beim Betrieb der im Stand der Technik bekannten Düsenrollenwäschen somit häufig zu Ausfallzeiten, nämlich dann, wenn ein Filter ersetzt werden muss, und zudem zu hohen Betriebskosten, da die Filter in der Anschaffung sehr kostenintensiv sind.

Aufgrund des eingangs genannten Standes der Technik liegt der vorliegenden Erfindung die Aufgabe zugrunde, einen Filter zur Verwendung an einer Düsenrollenwäsche zu entwickeln, der wirksam Partikel ab ca. 1,5mm Durchmesser aus einem Schwemmwasserstrom entfernt, der auch bei geringem Wasserdruck ausreichend Wasser für die Düsenrollenwäsche zur Verfügung stellt, der zudem Mittel aufweist, die ein Verstopfen des Filters und einen kontinuierlichen Betrieb über einen langen Zeitraum des Filters ermöglichen, wobei die Einsatzzeit der Düsenrollenwäsche verlängert ist, und der dabei kostengünstig und einfach herstellbar ist.

Zur Lösung dieser Aufgabe schlägt die Erfindung vor, dass der Filter ein Filtergehäuse mit einem an oder nahe am ersten Endbereich angeordnetem Einlauf und einen am oder nahe am entgegensetzten zweiten Ende angeordnetem Auslauf für ungefiltertes Schwemmwasser aufweist, wobei im Filtergehäuse zwischen dem Einlauf und dem Auslauf ein Siebkorb angeordnet ist, der von Teilen des Schwemmwassers durchströmt ist, dieses beim Durchströmen filtert, und durch einen Filtratauslauf, durch den ausschließlich durch den Siebkorb gefiltertes Schwemmwasser durchfließt, an das Leitungssystem zur Zuführung zur Düsenrollenwäsche abgibt, wobei innerhalb des Filtergehäuses Mittel zur Reinigung des Siebkorbes angeordnet sind.

Bei einem derartigen erfindungsgemäßen Filter wird aus dem Volumenstrom des Schwemmwassers lediglich ein Teil des Schwemmwassers gefiltert und durch den Filtratauslauf zur Düsenrollenwäsche geführt. Die Hochdruckpumpe ist dabei im Volumenstrom nach dem Filter und vor der Düsenrollenwäsche angeordnet, so dass der Filter das Schwemmwasser bei niedrigem Druck filtern kann. Der Siebkorb des erfindungsgemäßen Filters weist dabei eine Lochgröße oder Maschenweite auf, die sämtliche Partikel größer 1,5mm zurückhält, um diese aus dem Schwemmwasser herauszufiltern. Die gefilterten Partikel, die den Siebkorb nicht in Richtung des Filtratauslaufs durchdringen, werden zumindest teilweise durch das ungefilterte Schwemmwasser aufgenommen und durch den Auslass des Filters mitsamt des ungefilterten Schwemmwassers aus dem Filter heraus abgeführt.

Bereits hierdurch ist ein Verstopfen des Siebkorbs und somit des Filters weitestgehend verhindert. Zudem muss der Filter nicht in dem Hochdruck-Wasserstrom, also nach der Hochdruckpumpe angeordnet werden, so dass die Anforderungen an sich an den Filter geringer sind. Der aus dem Auslauf abgeführte ungefilterte Teil des Schwemmwassers wird mitsamt der vom Siebkorb zurückgehaltenen Verunreinigungen durch den Auslauf zurück in das Klärbecken, gegebenenfalls den Bruckner, abgeführt.

Ein derartiger erfindungsgemäßer Filter ist kostengünstig und einfach herstellbar und ermöglicht einen langen Betrieb einer entsprechenden Düsenrollenwäsche ohne Ausfallzeiten, in der beispielsweise der Filter erneuert werden muss. Durch die Anordnung in dem Bereich der Schwemmwasserzuführung mit geringem Druck ist zum einen die Lebensdauer eines entsprechenden Filters erhöht und zum anderen kann der Filter kostengünstig hergestellt werden.

Insbesondere kann besonders bevorzugt vorgesehen sein, dass das Filtergehäuse aus einem Druckbehälter besteht, der einen zylindrischen Abschnitt mit mindestens einer verschlossenen Stirnseite aufweist, wobei der Einlauf nahe der ersten Stirnseite und der Auslauf an oder nahe an der zweiten Stirnseite angeordnet ist.

Eine derartige zylindrische Ausbildung des Filtergehäuses ermöglicht zum einen einen besonders effektiven Einsatz des Filters als auch einen kontinuierlichen Fluss durch das Filtergehäuse des sowohl gefilterten als auch ungefilterten Schwemmwasserstroms.

Auch kann insbesondere bevorzugt vorgesehen sein, dass der Siebkorb im Querschnitt eine kreisringartige Form aufweist, deren Durchmesser geringer ist als der Innendurchmesser des Filtergehäuses, der an seinem oberen und seinem unteren Ende gegenüber der Innenmantelfläche des Filtergehäuses abgedichtet ist, der dabei achsparallel zur Innenmantelfläche des Filtergehäuses zwischen dessen Einlauf und dessen Auslauf angeordnet ist und von zu filterndem Schwemmwasser in Richtung der Innenmantelfläche des Filtergehäuses durchströmt ist, wobei der Filtratauslauf auf der Außenmantelfläche des Filtergehäuses nahe dem Auslauf benachbarten Ende des Siebkorbs angeordnet und durch eine Ausnehmung im Filtergehäuse gebildet ist.

Die kreisrunde oder kreisringartige Form des Siebkorbs hat sich als besonders vorteilhaft erwiesen, da diese beispielsweise aus einem langlebigen Lochblech kostengünstig und einfach hergestellt werden kann. Die Lochungen dieses Lochblechs als Siebkorb sind dabei derart ausgebildet, dass Partikel ab einer Größe von 1,5mm im Durchmesser und größer diese nicht durchströmen können und somit zurückgehalten werden.

Diese zurückgehaltenen Partikel werden zumindest teilweise vom Hauptstrom des Wassers, also dem Strom, der vom Einlass des Gehäuses in Richtung des Auslaufs strömt, aufgenommen und durch den Auslauf ungefiltert aus dem Filter heraus abgeführt.

Der Siebkorb ist dabei derart im Filtergehäuse angeordnet, dass gefiltertes Wasser ausschließlich durch den Filtratauslauf abfließen kann. Dies ist insbesondere dadurch sichergestellt, dass der Siebkorb an seinem oberen und seinem unteren Ende gegenüber der Innenmantelfläche des Filtergehäuses abgedichtet ist.

Weiter kann besonders bevorzugt vorgesehen sein, dass die Mittel zur Reinigung des Siebkorbes durch an einer Welle angeordnete und durch eine Rotation der Welle um die um die Mittellängsachse des Filtergehäuses drehbare Abstreifer gebildet sind, die den Siebkorb kontaktieren und während der Drehung sich am Siebkorb durch den Filtervorgang abgesetzte Verunreinigungen lösen, wobei die gelösten Verunreinigungen vom ungefilterten Schwemmwasser aufgenommen und aus dem Filter durch den Auslauf heraus geschwemmt werden.

Um einen noch effektiveren Einsatz des Filters, das heißt eine größere Menge an Schwemmwasser wirksam von Partikeln größer 1,5mm befreien zu können, zu ermöglichen, weist der Filter um die Mittellängsachse des Filtergehäuses drehbare Abstreifer auf. Diese Abstreifer kontaktieren mit ihren äußeren freien Endbereichen den Siebkorb und lösen während der Drehung sich am Siebkorb abgesetzte Verunreinigungen, so dass die gelösten Verunreinigungen vom ungefilterten Schwemmwasser aufgenommen werden können und aus dem Filter heraus durch den Auslauf geschwemmt werden.

Somit ist durch die Anordnung derartiger Abstreifer die Reinigungsleistung des Filters nochmals deutlich erhöht, wobei eine äußerst hohe Einsatzzeit des Filters ermöglicht ist.

Dabei kann besonders bevorzugt vorgesehen sein, dass die Abstreifer durch Bürsten gebildet sind.

Die Verwendung von Bürsten als Abstreifern hat sich als besonders wirksam bewährt. Alternativ können jedoch auch Gummilippen oder Kanten aus Metall verwendet werden um als Abstreifer am Siebkorb entlangzugleiten und eine hohe Lebensdauer und somit Einsatzzeit des Filters bei gleichzeitig hoher Filterleistung zu ermöglichen.

Schließlich kann besonders bevorzugt vorgesehen sein, dass die Welle das Filtergehäuse stirnseitig nach außen durchgreift und dort mittels eines motorischen Antriebs verdrehbar ist.

Hierdurch ist es ermöglicht, am das Filtergehäuse durchgreifenden Ende der Welle einen motorischen Antrieb, wie insbesondere einen Elektromotor anzuordnen, mittels dessen die Drehzahl der Welle und somit der Abstreifer beliebig einstellbar und somit steuerbar ist.

Je nach Volumenstrom und Verunreinigungsgrad kann somit die Geschwindigkeit der sich drehenden Abstreifer wunschgemäß angepasst werden, um eine hohe Filterleistung zu erzielen und wirksam ein Verstopfen des Siebkorbs zu verhindern.

Ein Ausführungsbeispiel der Erfindung ist in den Figuren dargestellt und im Folgenden näher beschrieben.

Es zeigt:
- Figur 1: einen erfindungsgemäßen Filter in Seitenansicht geschnitten;

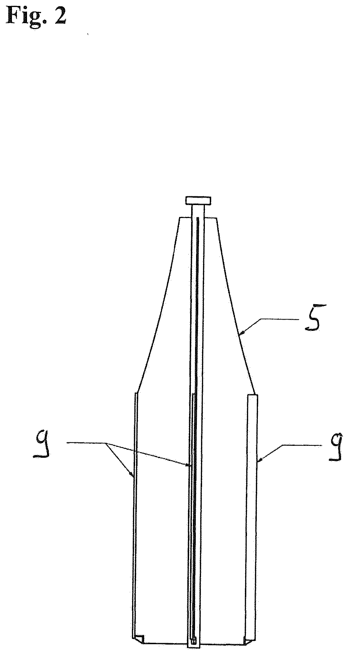

- Figur 2: einen erfindungsgemäßen Abstreifer in Einzeldarstellung;
- Figur 3: einen erfindungsgemäßen Siebkorb in Einzeldarstellung in Seitenansicht.

In den Figuren ist ein Filter 1 insbesondere zur Verwendung für eine Düsenrollenwäsche gezeigt.

Derartige Düsenrollenwäschen dienen dazu, Anhaftungen und Verunreinigungen von Feldfrüchten, insbesondere von Zuckerrüben zu entfernen. Derartige Düsenrollenwäschen werden üblicherweise von einem mit Schwemmwasser als Waschwasser befüllten Becken wie beispielsweise einem Klärbecken oder auch einem Rundklärbecken, welches auch als Bruckner bezeichnet wird, mit Wasser gespeist. Das Klärbecken ist dabei mittels eines Leitungssystems mit mindestens einer Hochdruckpumpe verbunden, welche das Wasser zur Düsenrollenwäsche zur Versorgung derselben mit Schwemmwasser pumpt. Dabei ist zwischen mit Wasser befülltem Becken und der Düsenrollenwäsche ein Filter 1 im Leitungssystem angeordnet. Dieser Filter 1 dient dazu, Verunreinigungen mit einer Partikelgröße von mindestens 1,5mm aus dem Schwemmwasser zu filtern, da diese Verunreinigungen ansonsten die Düsen der Düsenrollenwäsche verstopfen und gegebenenfalls beschädigen würden.

Erfindungsgemäß weist der Filter 1 ein Filtergehäuse 4 mit einem nahe am ersten Endbereich angeordneten Einlauf 2 und einem am zweiten Ende angeordneten Auslauf 3 auf. Durch diesen Auslauf 3 kann ungefiltertes Schwemmwasser nach dem Durchströmen des Filtergehäuses 4 aus dem Filter 1 herausströmen. Erfindungsgemäß ist im Filtergehäuse 4 zwischen dem Einlauf 2 und dem Auslauf 3 ein Siebkorb 6 angeordnet. Der Siebkorb 6 ist beim Durchströmen des Filtergehäuses 4 von Teilen des Schwemmwassers durchströmt. Beim Durchströmen filtert der Siebkorb 6 das Schwemmwasser, so dass ausschließlich gefiltertes Schwemmwasser durch einen Filtratauslauf 7 aus dem Filtergehäuse 4 herausgeführt und einem Leitungssystem zugeführt ist. Zudem sind innerhalb des Filtergehäuses 4 Mittel zur Reinigung des Siebkorbes 6 angeordnet. Diese Mittel zur Reinigung können Partikel vom Siebkorb 6 entfernen, die nicht allein durch den Volumenstrom des Schwemmwassers zwischen Einlauf 2 und Auslauf 3 mitgeführt und aus dem Filtergehäuse 4 herausgeführt werden. Der erfindungsgemäße Filter 1 kann somit mit einem großen Schwemmwasserstrom aus einem Klärbecken gespeist werden, wobei lediglich ein kleiner Teil des großen Schwemmwasserstroms gefiltert und dem Schwemmwasserstrom entnommen wird, um diesen der Düsenrollenwäsche zuzuführen. Dies erfolgt bei verhältnismäßig geringem Druck, so dass der Filter 1 nicht für hohe Drücke ausgelegt sein muss. Zudem ist der Filter 1 im Leitungssystem vor der Hochdruckpumpe installiert, so dass lediglich geringe Drücke im Filter 1 vorherrschen. Die Erzeugung eines hohen Drucks durch die Hochdruckpumpe erfolgt somit nach der Filtrierung des Schwemmwassers. Somit ist ein erfindungsgemäßer Filter 1 kostengünstig herstellbar und ermöglicht gegenüber bekannten Lösungen deutlich längere Einsatzzeiten des Filters 1 ohne diesen erneuern zu müssen.

Bei dem erfindungsgemäßen Filter 1 durchströmt ein Hauptstrom des zu filternden Schwemmwassers den Filter 1 beziehungsweise dessen Filtergehäuse 4 in axialer Richtung. Lediglich ein geringer Teil dieses Hauptstroms fließt quer zur Hauptströmungsrichtung durch den Siebkorb 6. Das den Siebkorb 6 durchflossene und somit gefilterte Wasser verlässt als Filtrat den Filter 1 beziehungsweise das Filtergehäuse 4 durch den eigens dafür angeordneten Filtratauslauf 7. Bereits beim Durchströmen des Schwemmwassers in Richtung des Auslaufs 3 des Filtergehäuses 4 wird eine große Menge an sich am Siebkorb 6 absetzenden Verunreinigungen mit aufgenommen und durch den Auslauf 3 aus dem Filtergehäuse 4 herausgeführt. Zur Unterstützung dieser Reinigung des Filters 1, also zur Abführung von sich am Siebkorb 6 abgesetzten Verunreinigungen sind zusätzliche Mittel zur Reinigung des Siebkorbes 6 am Filter 1 angeordnet.

Ein derartiger erfindungsgemäßer Filter 1 kann bei Betriebsdrücken von nur ca. 1 bis 2 bar wirksam eine ausreichend große Menge an gefiltertem Schwemmwasser aus einem großen Schwemmwasserstrom entnehmen, filtern und anschließend der Düsenrollenwäsche zur Verfügung stellen.

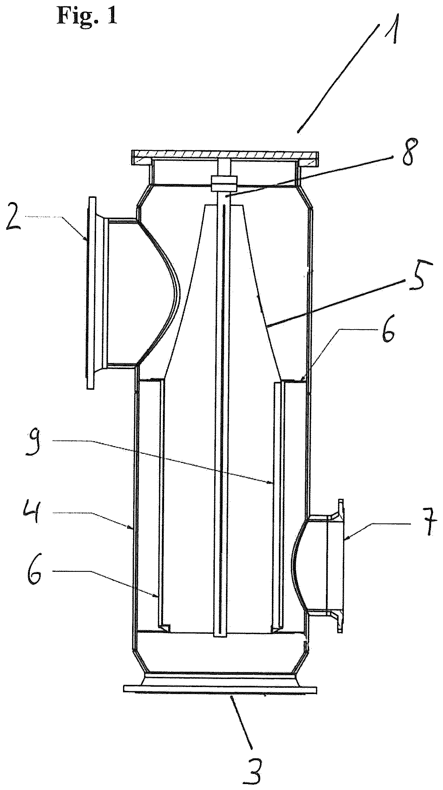

Wie aus Figur 1 ersichtlich, besteht das Filtergehäuse 4 aus einem Druckbehälter, der einen zylindrischen Abschnitt mit einer verschlossenen Stirnseite und einer zweiten Stirnseite, die den Auslauf 3 bildet. Der Einlauf 2 ist dabei nahe der ersten Stirnseite, die dem Auslauf 3 gegenüberliegt, angeordnet. In einem nicht in den Figuren gezeigten Ausführungsbeispiel kann der Auslauf 3 auch nahe der zweiten Stirnseite auf der Mantelfläche des Filtergehäuses 4 zwischen zweiter Stirnseite und Filtratauslauf 7 angeordnet sein.

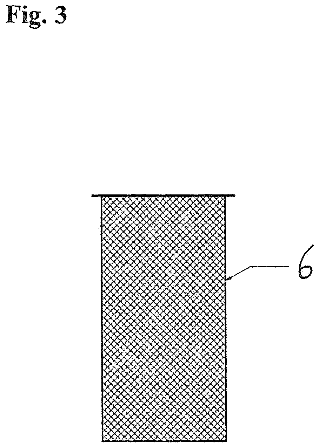

Der Siebkorb 6 weist, wie insbesondere aus Figur 3 ersichtlich, eine im Querschnitt etwa kreisringartige Form auf, deren Durchmesser geringer ist als der Innendurchmesser des Filtergehäuses 4 des Filters 1.

In der in Figur 1 gezeigten Montagesolllage ist der Siebkorb 6 an seinem oberen Ende und an seinem unteren Ende gegenüber der inneren Mantelfläche des Filtergehäuses 4 abgedichtet angeordnet. Zur Filtrierung des durch da Filtergehäuse 4 durchgeführten Schwemmwasserstroms fließt ein Teil des Schwemmwasserstroms quer zur Hauptströmungsrichtung durch Siebkorb 6 hindurch und wird dabei gefiltert. Lediglich der Anteil des Schwemmwasserstroms, der den Siebkorb 6 durchströmt, verlässt das Filtergehäuse 4 durch den Filtratauslauf 7 und kann der Hochdruckpumpe und anschließend der Düsenrollenwäsche zugeführt werden. Der Siebkorb 6 ist im Ausführungsbeispiel aus einem Lochblech gebildet, wobei die Lochungen eine Filterung von Partikeln größer 1,5mm ermöglichen. Je nach Bedarf kann an die zu filternde Partikelgröße können diese Lochungen des Lochblechs größer oder kleiner gestaltet werden, um größere oder kleinere Partikel zu filtern. Zudem kann alternativ auch beispielsweise ein Geflecht oder andere Mittel, die geeignet sind, die entsprechend gewünschte Partikelgröße zu filtern, vorgesehen sein.

Um die Filterleistung und die Reinigung des Siebkorbs 6 nochmals deutlich zu erhöhen, sind beim erfindungsgemäßen Filter 1 Abstreifer 5 vorgesehen, welche an einer Welle 8 angeordnet und dabei durch eine Rotation der Welle 8 um die Mittellängsachse des Filtergehäuses 4 drehbar sind. Diese Abstreifer 5 kontaktieren den Siebkorb 6 und lösen durch die Kontaktierung während der Drehung der Welle 8 sich am Siebkorb 6 durch den Filtervorgang abgesetzte Verunreinigungen. Diese gelösten Verunreinigungen werden vom ungefilterten Hauptstrom des Schwemmwassers aufgenommen und durch den Auslauf 3 aus dem Filter 1 beziehungsweise dessen Filtergehäuse 4 herausgeschwemmt. Im Ausführungsbeispielsind die Abstreifer 5 durch Bürsten 9 gebildet. Alternativ und in den Figuren nicht gezeigt, können jedoch auch andere Ausführungsformen als Abstreifer, wie beispielsweise Gummilippen oder Kunststofflippen oder dergleichen dienen.

Zudem ist die Welle 8 durch einen außerhalb des Filtergehäuses 4 angeordneten motorischen Antrieb verdrehbar, wobei die Welle 8 das Filtergehäuse 4 stirnseitig nach außen durchgreift und dort mit dem motorischen Antrieb verbunden ist. Der motorische Antrieb kann je nach Verschmutzungsgrad des Siebkorbes 6, der abhängig von der Menge an gefiltertem Schwemmwasser und Anteil an Verunreinigungen im Schwemmwasser ist, gesteuert werden, um einen besonders effizienten Betrieb des Filters 1 durch kontinuierliches Entfernen von sich am Siebkorb 6 abgesetzten Verunreinigungen zu ermöglichen.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

### Stückeverzeichnis:

- 1): Filter
- 2): Einlauf
- 3): Auslauf
- 4): Filtergehäuse
- 5): Abstreifer
- 6): Siebkorb
- 7): Filtratauslauf
- 8): Welle
- 9): Bürsten

## Patentansprüche

1. Filter für eine Düsenrollenwäsche zum Entfernen von Verunreinigungen von Feldfrüchten, insbesondere von Zuckerrüben, wobei die Düsenrollenwäsche zumindest ein mit Waschwasser befülltes Becken, insbesondere Klärbecken, aufweist, welches mittels eines Leitungssystems und mindestens einer Hochdruckpumpe mit der Düsenrollenwäsche zur Versorgung derselben mit Schwemmwasser verbunden ist, wobei zwischen Becken oder Klärbecken und Leitungssystem ein Filter zur Filtration des Schwemmwassers und Entfernung von Partikeln mit einer Partikelgröße von mindestens 1,5mm Durchmesser angeordnet ist, **dadurch gekennzeichnet, dass** der Filter (1) ein Filtergehäuse (4) mit einem an oder nahe am ersten Endbereich angeordnetem Einlauf (2) und einen am oder nahe am entgegensetzten zweiten Ende angeordnetem Auslauf (3) für ungefiltertes Schwemmwasser aufweist, wobei im Filtergehäuse (4) zwischen dem Einlauf und dem Auslauf ein Siebkorb (6) angeordnet ist, der von Teilen des Schwemmwassers durchströmt ist, dieses beim Durchströmen filtert, und durch einen Filtratauslauf (7), durch den ausschließlich durch den Siebkorb (6) gefiltertes Schwemmwasser durchfließt, an das Leitungssystem zur Zuführung zur Düsenrollenwäsche abgibt, wobei innerhalb des Filtergehäuses (4) Mittel zur Reinigung des Siebkorbes (6) angeordnet sind.

2. Filter (1) für eine Düsenrollenwäsche nach Anspruch 1, **dadurch gekennzeichnet, dass** das Filtergehäuse (4) aus einem Druckbehälter besteht, der einen zylindrischen Abschnitt mit mindestens einer verschlossenen Stirnseite aufweist, wobei der Einlauf (2) nahe der ersten Stirnseite und der Auslauf (3) an oder nahe an der zweiten Stirnseite angeordnet ist.

3. Filter (1) für eine Düsenrollenwäsche nach Anspruch 1 oder 2, **dadurch gekennzeichnet, dass** der Siebkorb (6) im Querschnitt eine kreisringartige Form aufweist, deren Durchmesser geringer ist als der Innendurchmesser des Filtergehäuses (4), der an seinem oberen und seinem unteren Ende gegenüber der Innenmantelfläche des Filtergehäuses (4) abgedichtet ist, der dabei achsparallel zur Innenmantelfläche des Filtergehäuses (4) zwischen dessen Einlauf (2) und dessen Auslauf (3) angeordnet ist und von zu filterndem Schwemmwasser in Richtung der Innenmantelfläche des Filtergehäuses (4) durchströmt ist, wobei der Filtratauslauf (7) auf der Außenmantelfläche des Filtergehäuses (4) nahe dem Auslauf (3) benachbarten Ende des Siebkorbs (6) angeordnet und durch eine Ausnehmung im Filtergehäuse (4) gebildet ist.

4. Filter (1) für eine Düsenrollenwäsche nach einem der Ansprüche 1 bis 3, **dadurch gekennzeichnet, dass** die Mittel zur Reinigung des Siebkorbes (6) durch an einer Welle (8) angeordnete und durch eine Rotation der Welle (8) um die um die Mittellängsachse des Filtergehäuses (4) drehbare Abstreifer (5) gebildet sind, die den Siebkorb (6) kontaktieren und während der Drehung sich am Siebkorb (6) durch den Filtervorgang abgesetzte Verunreinigungen lösen, wobei die gelösten Verunreinigungen vom ungefilterten Schwemmwasser aufgenommen und aus dem Filter (1) durch den Auslauf (3) heraus geschwemmt werden.

5. Filter (1) für eine Düsenrollenwäsche nach Anspruch 4, **dadurch gekennzeichnet, dass** die Abstreifer (5) durch Bürsten (9) gebildet sind.

6. Filter (1) für eine Düsenrollenwäsche nach Anspruch 4 oder 5, **dadurch gekennzeichnet, dass** die Welle (8) das Filtergehäuse (4) stirnseitig nach außen durchgreift und dort mittels eines motorischen Antriebs verdrehbar ist.
